# EUROPÄISCHE PATENTANMELDUNG

(11) **EP 4 317 714 A1**
(43) Veröffentlichungstag der Anmeldung: **07.02.2024**
(21) Anmeldenummer: 23183789.9
(22) Anmeldetag: 06.07.2023
(51) Int. Cl.: F16B 21/02, B60R 13/02

(54) **KOMPRESSIONSVERSCHLUSS**

(30) Priorität: 03.08.2022 DE 102022208074
(71) Anmelder: Siemens Mobility GmbH, 81739 München (DE)
(72) Erfinder: Baumann, Thomas, 97084 Würzburg (DE); Hauthaler, Josef, 91088 Bubenreuth (DE); Hoffmann, Alexander, 90765 Fürth (DE)
(74) Vertreter: Siemens Patent Attorneys

(57) **Zusammenfassung**

Erfindungsgemäß wird ein Kompressionsverschluss 1, insbesondere zur Befestigung eines Verkleidungselements 2 an einer Halterung 3, bereitgestellt umfassend ein Gehäuse 10, ein innerhalb des Gehäuses 10 drehbar gelagertes Verschlusselement 20 und ein Gegenelement 30, das mit dem Verschlusselement 20 in Eingriff bringbar ist. Das Gehäuse 10 weist eine erste frustokonische Zentrierfläche 12 und das Gegenelement 30 eine zweite frustokonische Zentrierfläche 32 zur Aufbringung eines kraftinduzierten Formschlusses auf.

## Beschreibung

Die Erfindung betrifft einen Kompressionsverschluss, insbesondere zur Befestigung eines Verkleidungselements an einer Halterung, umfassend ein Gehäuse, ein innerhalb des Gehäuses drehbar gelagertes Verschlusselement und ein Gegenelement, das mit dem Verschlusselement in Eingriff bringbar ist.

Kompressionsverschlüsse übertragen Kraft durch Reibung. Dadurch sind die erreichbaren Kräfte, die über den Antrieb oder das Verschlusselement des Kompressionsverschlusses aufgebracht und übertragen werden können, stark begrenzt. Ein Rutschen des Kompressionsverschlusses ist nicht immer zulässig, da dies zu Verschleiß führt oder eine Nachweisführung in Bezug auf die Einhaltung von Kundenspezifikationen und Normen nicht möglich ist.

Kompressionsverschlüsse wurden daher bisher für die Übertragung größerer Kräfte nicht eingesetzt und es mussten z.B. Schrauben verwendet werden, die ein wiederholtes Öffnen und Schließen zulassen. Dies geschah bspw. in Form von Trapezgewindeverschlüssen. Nachteilig hierbei ist jedoch, dass Verschraubungen aufgrund der damit verbundenen Gewindeverbindungen einen längeren Montagevorgang erfordern.

Ausgehend davon liegt der Erfindung die Aufgabe zugrunde einen Kompressionsverschluss zu schaffen, der es ermöglicht große Kräfte zu übertragen, ohne dass es zu einem verlängerten Montagevorgang kommt. Diese Aufgabe wird durch die Merkmale des Anspruchs 1 gelöst. Vorteilhafte Ausgestaltungen und Weiterbildungen sind Gegenstand der Unteransprüche.

Erfindungsgemäß wird ein Kompressionsverschluss, insbesondere zur Befestigung eines Verkleidungselements an einer Halterung, bereitgestellt. Der Kompressionsverschluss umfasst ein Gehäuse, ein innerhalb des Gehäuses drehbar gelagertes Verschlusselement und ein Gegenelement, das mit dem Verschlusselement in Eingriff bringbar ist. Das Gehäuse weist eine erste frustokonische Zentrierfläche und das Gegenelement weist eine zweite frustokonische Zentrierfläche zur Aufbringung eines kraftinduzierten Formschlusses auf.

Weiterhin wird erfindungsgemäß ein System bereitgestellt, umfassend einen solchen oder wie nachfolgend weitergebildeten Kompressionsverschluss, ein Verkleidungselement und eine Halterung, wobei das Verkleidungselement durch den Kompressionsverschluss an der Halterung befestigt ist.

Der Begriff "frustokonisch" im Sinne der Erfindung ist mit dem Begriff kegelstumpfförmig gleichzusetzen.

Durch den erfindungsgemäßen Kompressionsverschluss können große Querkräfte übertragen werden und der erfindungsgemäße Kompressionsverschluss ermöglicht einen kraftinduzierten Formschluss sowie eine vergrößerte Haftreibung gegenüber bekannten Systemen.

Der Kompressionsverschluss hat zusätzlich den Vorteil, dass diesem aufgrund der frustokonischen Zentrierflächen Freiheitsgrade entzogen sind, sodass dieser eine bessere Verbindungswirkung aufweist. Hierbei fallen die Freiheitsgrade quer zur Längsachse A weg, d.h. es bleiben nur noch Freiheitsgrade in Längsachsrichtung, also in Translationsrichtung (Zug) der Längsachse A, wenn sie größer ist als die Schließkraft und rotatorische Freiheitsgrade um die Längsachse A, wenn die Haftreibung überwunden wird.

Die konischen Zentrierflächen erleichtern zudem das Einführen des Gehäuses in das Gegenelement.

Ferner weist der erfindungsgemäße Kompressionsverschluss eine Konstruktion mit geringerem Verschleiß auf und bietet eine höhere Standzeit (im Vergleich zu bisherigen Trapezgewindeschlösser oder herkömmlichen Kompressionsverschlüssen).

Der erfindungsgemäße Kompressionsverschluss dient dazu ein Verkleidungselement an einer Halterung zu befestigen. Hierbei handelt es sich vorzugsweise um ein Verkleidungselement eines Schienenfahrzeugs. Es kann aber auch ein Verkleidungselement eines anderen Fahrzeugs sein, sofern der Einsatz mit dem Einsatz an einem Schienenfahrzeug vergleichbar ist.

Bei dem Verkleidungselement kann es sich beispielsweise um eine Außenverkleidung eines Schienenfahrzeugs handeln, wobei der erfindungsgemäße Kompressionsverschluss es ermöglicht die hierfür nötigen großen Schließkräfte aufzubringen. Es können Verkleidungselemente befestigt werden, die gegen Verdrehung um die Achse A gesichert sind (z.B.: mit mind. 2 Schnittstellen - 1 Scharnier und 1 Kompressionsschloss, oder 2 Kompressionsschlösser), durch ihr hohes Eigengewicht oder hohe Belastung große Schließkräfte benötigen und die häufigen bzw. schnellen Zugang erlauben müssen wie etwa Seitenklappen, Drehgestellverkleidungen, Wartungsklappen. Die konischen Zentrierflächen in Gegenelement (auch Kegel genannt) und Gehäuse schaffen einen kraftinduzierten Formschluss.

Es ist aber auch denkbar, dass andere Verkleidungselemente wie Innenverkleidungen mit dem erfindungsgemäßen Kompressionsverschluss befestigbar sind.

Das Gehäuse ist insbesondere derart ausgebildet, dass dieses an ein Verkleidungsteil anbringbar ist.

In Weiterbildung des Kompressionsverschlusses kann vorgesehen sein, dass durch das drehbar gelagerte Verschlusselement eine Vorspannkraft auf die erste frustokonische Zentrierfläche und die zweite frustokonische Zentrierfläche zur Erzeugung des kraftinduzierten Formschlusses aufbringbar ist.

Hierdurch kann der Kompressionsverschluss durch das Drehen des Verschlusselements betätigt werden und es wird eine Vorspannkraft erzeugt. Das Verschlusselement kann dabei ein freies Ende aufweisen, das nach Außen gut zugänglich ist und als Vierkant ausgebildet ist.

Ferner kann vorgesehen sein, dass das Verschlusselement drehbar um eine Längsachse zwischen einer verriegelten Position und einer geöffneten Position ausgebildet ist.

Hierdurch wird ermöglicht, dass eine geöffnete und eine geschlossene Position definiert sind, in welche das Verschlusselement überführbar ist. In der geöffneten Position des Verschlusselements sind die mit dem Verschlusselement verbundenen Elemente ebenfalls in geöffneter Position. In der geöffneten Position ist ferner der Kompressionsverschluss geöffnet, sodass das Verkleidungselement mitsamt dem Gehäuse und dem Verschlusselement mitsamt den damit verbundenen Bauteilen von der Halterung und dem daran befestigten Gegenelement entkoppelt werden kann. In der geöffneten Position kann das Verkleidungselement somit von der Halterung abgenommen werden. In der verriegelten Position ist der Kompressionsverschluss geschlossen, sodass das Verkleidungselement durch den Kompressionsverschluss mit der Halterung verbunden ist.

Insbesondere kann vorgesehen sein, dass der Drehwinkel des Verschlusselements zwischen der verriegelten Position und der geöffneten Position 90° beträgt.

Ein Drehwinkel von 90° hat sich als besonders vorteilhaft erwiesen, weil dieser relativ klein und damit schnell und für einen Bediener bequem, ohne Umgreifen eines gängigen Vierkant-Schlüssels, drehbar ist. Somit ist ein schnelles und bequemes Öffnen und Schließen des Kompressionsverschlusses möglich.

Das Verschlusselement kann eine Markierung zu Anzeige der Drehposition aufweisen. Bei einem Drehwinkel von 90° ist ähnlich wie bei einem Drehknopf an einer Türe durch eine Markierung erkennbar, ob der Kompressionsverschluss verriegelt ist, sodass eine visuelle Inspektion des Schließzustand in Bezug auf die geöffnete oder geschlossene Position möglich ist.

Es kann in Ausgestaltung des Kompressionsverschlusses vorgesehen sein, dass das Verschlusselement ein Verriegelungselement aufweist.

Hierdurch wird ein Element bereitgestellt, das eine Verriegelung des Kompressionsverschlusses gegenüber dem Gegenelement ermöglich. Das Verriegelungselement kann lösbar mit dem Verschlusselement verbunden sein, sodass dieses im Fall von Verschleiß einfach wechselbar ist.

In Weiterbildung kann vorgesehen sein, dass das Gegenelement zumindest eine Ausnehmung zur Führung des Verriegelungselements aufweist.

Hierdurch wird eine Führung innerhalb des Gegenelements bereitgestellt, in welcher das Verriegelungselement geführt ist. Durch das Bereitstellen einer solchen Führung wird einerseits eine definierte Führung bereitgestellt, welche das Verriegelungselement mitsamt den damit verbundenen Elementen führt und andererseits definierte Endpunkte für die geöffnete Position und die geschlossene Position bereitstellt. Zudem wird durch eine solche Ausnehmung zur Führung eine Fehlbedienung verhindert.

Ferner kann vorgesehen sein, dass das Verriegelungselement eine Achse ist, auf welcher zumindest eine Rolle drehbar gelagert ist, wobei die Rolle dazu dient die Vorspannkraft auf das Gegenelement aufzubringen.

Hierdurch wird eine Konfiguration angegeben, welche es erlaubt, dass ein Abrollen der Kontaktflächen des Verriegelungselements gegenüber dem Gegenelement stattfindet, sodass der Verschleiß an den Kontaktflächen zwischen Verriegelungselement und Gegenelement reduziert ist. Ferner ist die zumindest eine Rolle lösbar auf der Achse montiert, sodass diese auswechselbar ist.

Im Vergleich zu ähnlichen Systemen, die am Markt erhältlich sind, reduziert die zumindest eine Rolle an der Achse den Verschleiß beim Öffnen/Schließen unter Schließkraft bzw. dem Überführen zwischen geöffneter Position und geschlossener Position.

In Ausgestaltung kann vorgesehen sein, dass das Gegenelement zumindest eine Rollfläche aufweist, auf der die zumindest eine Rolle beim Verdrehen des Verschlusselements zwischen der geöffneten Position und der verriegelten Position abrollt, wobei die Rollfläche zumindest abschnittsweise eine Steigung aufweist, die derart ausgebildet ist, dass beim Verdrehen des Verschlusselements von der geöffneten Position in die verriegelte Position das Verschlusselement gegenüber dem Gegenelement in Achsrichtung auslenkbar ist.

Hierdurch wird erreicht, dass das Verschlusselement gegenüber dem Gegenelement bei Erreichen der verriegelten Position ausgelenkt ist. Auf diese Weise wird das Verschlusselement auch gegenüber dem Gehäuse in Achsrichtung ausgelenkt, wodurch eine Vorspannkraft durch entsprechende Vorspannelemente erzeugbar ist. Durch die Vorspannkraft wird einerseits der Kontakt zwischen der ersten frustokonischen Fläche und der zweiten frustokonischen Fläche zuverlässig hergestellt, sodass diese vorzugsweise vollständig in Anlage miteinander kommen. Weiterhin wird eine definierte Vorspannkraft erzeugt.

Ferner kann vorgesehen sein, dass die zumindest eine Rollfläche eine Vertiefung aufweist, die derart angeordnet ist, dass in der verriegelten Position des Verschlusselements die zumindest eine Rolle in der Vertiefung eingerastet ist.

Das Einrasten der Rollen in der Vertiefung sorgt für ein zuverlässiges Einrasten des Kompressionsverschlusses in der verriegelten Position, sodass der Kompressionsverschluss bzw. das System vibrationssicher verriegelt sind.

Weiterhin kann der Kompressionsverschluss in Weiterbildung zumindest ein Vorspannelement aufweisen, das zwischen dem Verschlusselement und dem Gehäuse angeordnet ist und bei axialer Auslenkung des Verschlusselements in Achsrichtung die Vorspannkraft erzeugt.

Vorzugsweise ist das zumindest eine Vorspannelement als zumindest eine Tellerfeder oder als Paket von Tellerfedern ausgebildet. Hierdurch wird ein Federelement angegeben, dass auf kleinen Wegen große Vorspannkräfte erzeugen kann und gleichzeitig einfach montier- und wechselbar ist.

In Ausgestaltung wird durch die Steigung der Rollflächen im Gegenelement über Komprimierung der Tellerfedern die Vorspannkraft als Schließkraft des Kompressionsverschlusses aufgebaut.

Ferner kann vorgesehen sein, dass die erste frustokonische Zentrierfläche zweistufig ausgebildet ist und die zweite frustokonische Zentrierfläche zweistufig ausgebildet ist.

Hierdurch wird eine Konfiguration angegeben, die eine verbesserte Zentrierwirkung aufweist und gleichzeitig eine gute Kraftübertragung erlaubt. Gleichsam wird hierdurch ein verbesserter Formschluss geschaffen.

In Ausgestaltung kann ferner vorgesehen sein, dass ein erster Bereich der ersten frustokonischen Zentrierfläche einen kleineren Kegelwinkel aufweist als der Kegelwinkel des zweiten Bereichs der ersten frustokonischen Zentrierfläche und/oder ein erster Bereich der zweiten frustokonischen Zentrierfläche einen kleineren Kegelwinkel aufweist als ein Kegelwinkel des zweiten Bereichs der zweiten frustokonischen Zentrierfläche. Hierdurch wird eine gestufte Anordnung ausgebildet, die eine gute Montierbarkeit erlaubt.

In Weiterbildung kann ferner vorgesehen sein, dass dem Gehäuse eine Gehäusemutter zugeordnet ist, mit welchem das Gehäuse an einem Verkleidungselement befestigbar ist. Hierdurch wird eine gut zu lösende und mit üblichen Werkzeugen montierbare Befestigung für das Befestigen des Gehäuses an dem Verkleidungselement angegeben und ein Wechsel bei Verschleiß wird ermöglicht. Bei Verschleiß können somit die Vorspannelemente wie z.B. die Tellerfedern, das Verriegelungselement oder die Rollen, an denen es zu Verschleiß kommen kann, gewechselt werden.

Ferner kann vorgesehen sein, dass dem Gegenelement eine Sicherungsmutter zugeordnet ist, mit welcher das Gegenelement an der Halterung befestigbar ist.

Hierdurch wird eine gut zu lösende und mit üblichen Werkzeugen montierbare Befestigung für das Befestigen des Gegenelements an der Halterung und ein Wechsel bei Verschleiß ermöglicht.

Nachfolgend soll die Erfindung anhand eines Ausführungsbeispiels mit Bezug auf die Zeichnungen erläutert werden.

Es zeigt:
- Fig. 1: in einer schematischen perspektivischen Schnittdarstellung einen erfindungsgemäßen Kompressionsverschluss;
- Fig. 2: in einer schematischen perspektivischen Schnittdarstellung einen vergrößerten Teilbereich des erfindungsgemäßen Kompressionsverschluss gemäß Fig. 1;
- Fig. 3: in einer schematischen Schnittdarstellung den erfindungsgemäßen Kompressionsverschluss gemäß Fig. 1 bis 2 in geöffneter Position;
- Fig. 4: in einer schematischen Schnittdarstellung den erfindungsgemäßen Kompressionsverschluss gemäß Fig. 1 bis 3 in verriegelter Position; und
- Fig. 5: in einer schematischen perspektivischen Darstellung den erfindungsgemäßen Kompressionsverschluss gemäß Fig. 1 bis 4 in verriegelter Position.

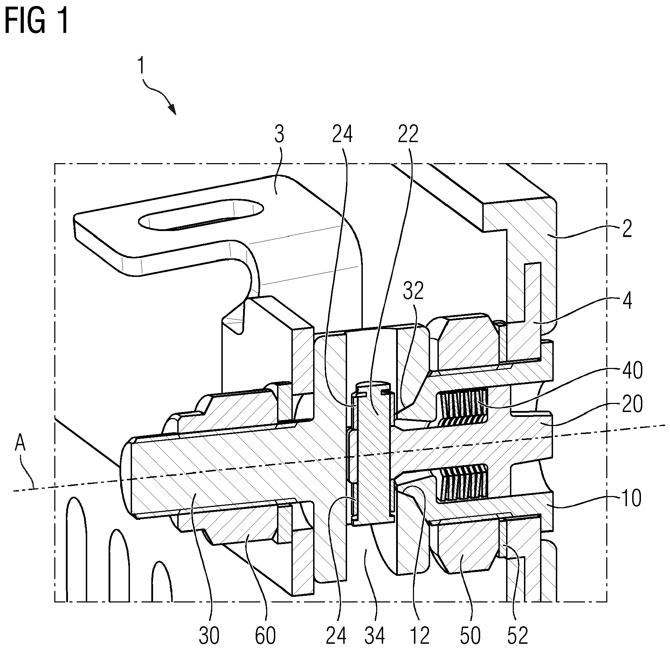

Fig. 1 zeigt in einer schematischen perspektivischen Schnittdarstellung einen erfindungsgemäßen Kompressionsverschluss 1.

Der Kompressionsverschluss 1 ist vorzugsweise dazu ausgebildet ein Verkleidungselement 2 an einer Halterung 3 zu befestigen.

Der Kompressionsverschluss 1 umfasst ein Gehäuse 10, ein innerhalb des Gehäuses 10 drehbar gelagertes Verschlusselement 20 und ein Gegenelement 30, das mit dem Verschlusselement 20 in Eingriff bringbar ist.

Das Gehäuse 10 weist eine erste frustokonische Zentrierfläche 12 und das Gegenelement 30 eine zweite frustokonische Zentrierfläche 32 zur Aufbringung eines kraftinduzierten Formschlusses auf.

Die Form der ersten frustokonischen Zentrierfläche 12 und der zweiten frustokonischen Zentrierfläche 32 entsprechen dabei einander, sodass diese ineinander eingreifen können und ein vollflächiger Kontakt zwischen der ersten frustokonischen Zentrierfläche 12 und der zweiten frustokonischen Zentrierfläche 32 ausbildbar ist.

Die erste frustokonische Zentrierfläche 12 ist an der dem Gegenelement 30 zugewandten Seite des Gehäuses 10 angeordnet. Das Gehäuse 10 ist ein rotationssymmetrisches Bauteil und weist im Wesentlichen die Form eines Napfes auf, der an beiden Seiten offen ist.

Das Verschlusselement 20 ist innerhalb des Gehäuses 10 angeordnet und in dem Gehäuse 10 entlang einer Längsachse A axialbeweglich und drehbar gelagert.

Durch das drehbar gelagerte Verschlusselement 20 ist eine Vorspannkraft auf die erste frustokonische Zentrierfläche 12 und die zweite frustokonische Zentrierfläche 32 zur Erzeugung des kraftinduzierten Formschlusses aufbringbar.

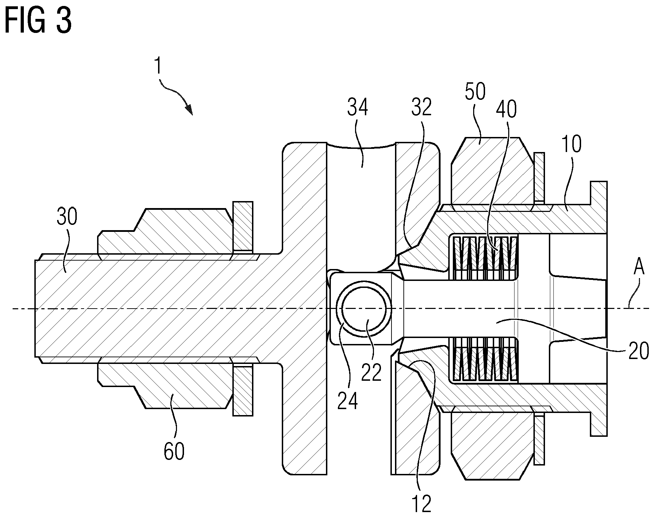

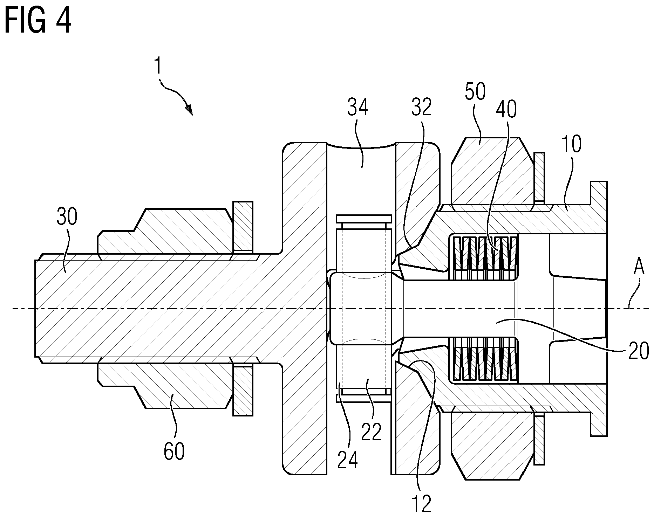

Das Verschlusselement 20 ist verdrehbar um eine Längsachse A zwischen einer verriegelten Position P₁ - wie in Fig. 4 gezeigt - und einer geöffneten Position P₂ - wie in Fig. 3 gezeigt - ausgebildet, wobei der Drehwinkel zwischen der verriegelten Position P₁ und der geöffneten Position P₁ vorzugsweise 90° beträgt.

Das Verschlusselement 20 weist an seiner dem Gegenelement abgewandten Seite eine Verstelleinrichtung auf. Diese kann bspw. in Form eines Außenvierkants oder eines Außensechskants ausgebildet sein. Es können aber andere Geometrien ausgebildet sein wie bspw. ein Innenvierkant oder Innensechskant. Auf die Verstelleinrichtung kann ein entsprechendes Werkzeug aufgesetzt werden, wodurch das Verschlusselement zwischen der verriegelten Position P₁ und der geöffneten Position P₂ verstellbar ist.

Ferner weist das Verschlusselement 20 ein Verriegelungselement 22 auf. Das Verriegelungselement 22 ist außerhalb des Gehäuses 10 angeordnet und mit einem Ende des Verschlusselements 20 verbunden, das sich über das Gehäuse 10 hinaus erstreckt. Dieses Ende des Verschlusselements 20 erstreckt sich in Richtung der Längsachse A über die erste frustokonische Zentrierfläche 12 des Gehäuses hinaus.

Das Verriegelungselement 22 ist als eine Achse ausgebildet, auf welcher zumindest eine Rolle 24 drehbar gelagert ist, wobei die Rolle 24 dazu dient die Vorspannkraft auf das Gegenelement 30 aufzubringen.

Vorliegend sind zwei Rollen 24 auf der Achse gelagert, wobei an jedem Ende der Achse eine Rolle 24 angeordnet ist. Das Verschlusselement 20 weist ein Durchgangsloch auf, durch welches das Verrieglungselement 22 hindurchgesteckt und mit dem Verschlusselement 20 verbunden ist.

Das Gegenelement 30 weist zumindest eine Ausnehmung 34 zur Führung des Verriegelungselements 22 auf.

Wie aus Fig. 1 zu erkennen ist, weist der Kompressionsverschluss 1 zumindest ein Vorspannelement 40 auf, das zwischen dem Verschlusselement 20 und dem Gehäuse 10 angeordnet ist.

Bei axialer Auslenkung des Verschlusselements 20 in Achsrichtung A erzeugt das Vorspannelement 40 die Vorspannkraft.

Das Vorspannelement 40 ist innerhalb des Gehäuses 10 angeordnet und stützt sich gegen das Gehäuse 10 ab. In Ausgestaltung handelt es sich bei dem Vorspannelement 40 um eine oder eine Mehrzahl an Tellerfedern. Das Verschlusselement 20 weist einen Absatz auf, der dazu ausgebildet ist, die Tellerfedern zu kontaktieren und bei axialer Auslenkung des Verschlusselements 20 zu komprimieren. Hierzu erstreckt sich das Verschlusselement 20 durch entsprechende Öffnungen der Tellerfedern hindurch.

Dem Gehäuse 10 ist eine Gehäusemutter 50 zugeordnet, mit welchem das Gehäuse 10 an einem Verkleidungselement 3 befestigbar ist. Gemäß Fig. 1 ist der Kompressionsverschluss 1 im montierten und verriegelten Zustand gezeigt. Das Gehäuse 10 ist gemäß Fig. 1 an dem Verkleidungselement 2 montiert. Die Gehäusemutter 50 weist ein Innengewinde auf und das Gehäuse 10 weist ein Außengewinde auf.

Dem Gegenelement 30 ist eine Sicherungsmutter 60 zugeordnet, mit welchem das Gegenelement 30 an der Halterung 3 befestigbar ist. Gemäß Fig. 1 ist der Kompressionsverschluss 1 im montierten und verriegelten Zustand gezeigt. Das Gegenelement 30 ist gemäß Fig. 1 an der Halterung 3 montiert. Die Sicherungsmutter 60 weist ein Innengewinde auf und das Gegenelement 30 weist ein Außengewinde auf.

Zur Befestigung des Gehäuses 10 an dem Verkleidungsteil 2 kann optional ein Zwischenelement 4 ausgebildet sein, dass zwischen Verkleidungsteil 2 und dem Gehäuse 10 angeordnet ist. Diese Konfiguration ist bspw. in Fig. 1 dargestellt.

Fig.1 zeigt weiterhin auch das System umfassend den Kompressionsverschluss 1, ein Verkleidungselement 2 und eine Halterung 3, wobei das Verkleidungselement 2 durch den Kompressionsverschluss 1 an der Halterung 3 befestigt ist.

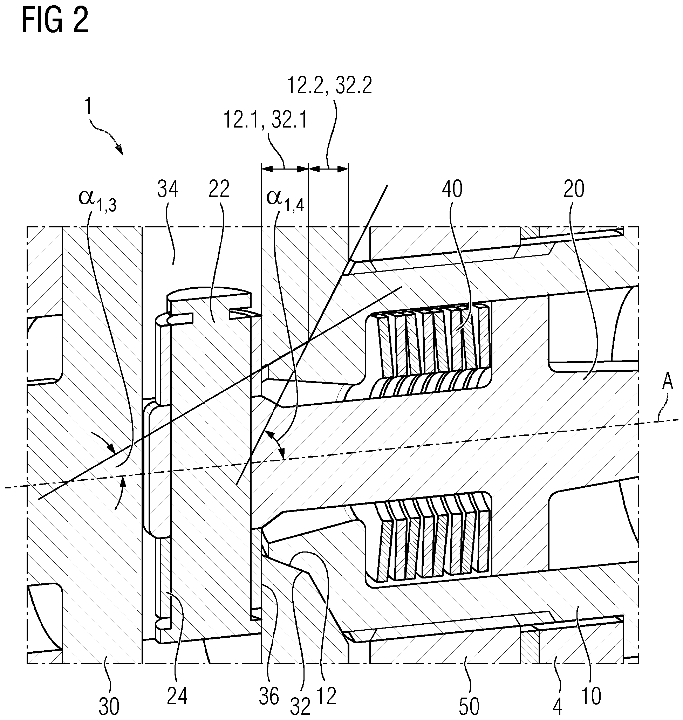

Fig. 2 zeigt in einer schematischen perspektivischen Schnittdarstellung einen vergrößerten Teilbereich des erfindungsgemäßen Kompressionsverschluss 1 gemäß Fig. 1.

Wie in der vergrößerten Darstellung gemäß Fig. 2 besser zu erkennen ist, ist die erste frustokonische Zentrierfläche 12 des Gehäuses 10 zweistufig ausgebildet. Die zweite frustokonische Zentrierfläche 32 des Gegenelement ist ebenfalls zweistufig ausgebildet.

Die erste frustokonische Zentrierfläche 12 weist einen ersten Bereich 12.1 und einen zweiten Bereich 12.2 auf. Der erste Bereich 12.1 ist näher an der Längsachse A angeordnet als der zweite Bereich 12.2.

Die zweite frustokonische Zentrierfläche 32 weist ebenfalls einen ersten Bereich 32.1 und einen zweiten Bereich 32.2 auf. Der erste Bereich 32.1 ist näher an der Längsachse A angeordnet als der zweite Bereich 32.2.

Vorzugsweise sind der erste Bereich 12.1 der ersten frustokonischen Zentrierfläche 12 und der erste Bereich 32.1 der zweiten frustokonischen Zentrierfläche 32 in Achsrichtung A gleich lang ausgebildet.

Vorzugsweise sind der zweite Bereich 12.2 der ersten frustokonischen Zentrierfläche 12 und der zweite Bereich 32.2 der zweiten frustokonischen Zentrierfläche 32 in Achsrichtung A gleich lang ausgebildet.

Der erste Bereich 12.1 der ersten frustokonischen Zentrierfläche 12 weist einen kleineren Kegelwinkel α₁ auf als ein Kegelwinkel α₂ des zweiten Bereichs 12.2 der ersten frustokonischen Zentrierfläche 12

Der erste Bereich 32.1 der zweiten frustokonischen Zentrierfläche 32 weist einen kleineren Kegelwinkel α₃ auf als ein Kegelwinkel α₄ des zweite Bereichs 32.2 der zweiten frustokonischen Zentrierfläche 32.

Fig. 3 zeigt in einer schematischen Schnittdarstellung den erfindungsgemäßen Kompressionsverschluss 1 gemäß Fig. 1 bis 2 in der geöffneten Position P₂. Gemäß Fig. 3 ist der Kompressionsverschluss 1 zur besseren Veranschaulichung ohne das Verkleidungsteil 2 und die Halterung 3 dargestellt.

Fig. 3 zeigt den Kompressionsverschluss 1 in einer geöffneten Position, wobei die erste frustokonische Zentrierfläche 12 des Gehäuses 10 und die zweite frustokonische Zentrierfläche 32 des Gegenelements 30 bereits aneinander anliegen. Das Verschlusselement 20 und das Verriegelungselement 22 mitsamt der Rollen 24 sind gemäß Fig. 3 in der geöffneten Position P₂ ausgerichtet.

Das Gehäuse 10 ist dabei auf das Gegenelement 30 aufgesteckt. In der dargestellten geöffneten Position P₂ ist der Kompressionsverschluss 1 durch Drehen des Verschlusselements 20 um die Achsrichtung A mitsamt des Verriegelungselement 22 verriegelbar.

Ebenso können in der geöffneten Position P₂ das Gehäuse 10 und das Gegenelement 30 voneinander entfernt oder demontiert werden. Dabei kann das Verschlusselement mit dem Verriegelungselement 22 und den Rollen 24 durch eine Öffnung in dem Gegenelement 30 aus der Ausnehmung 34 des Gegenelements 30 in Achsrichtung A herausgezogen werden.

Fig. 4 zeigt in einer schematischen Schnittdarstellung den erfindungsgemäßen Kompressionsverschluss 1 gemäß Fig. 1 bis 3 in der verriegelten Position P₁.

Wie aus der Zusammenschau von Fig. 3 und Fig. 4 zu erkennen ist, ist das Verschlusselement 20 in Fig. 4 mitsamt dem Verriegelungselement 22 und den daran angebrachten Rollen 24 im Vergleich zur in Fig. 3 gezeigten geöffneten Position P₂ in der verriegelten Position P₁ um einen Drehwinkel von 90° um die Achsrichtung A gedreht.

Das Gegenelement 30 und das Gehäuse weisen in der geöffneten Position P₂ und in der verriegelten Position P₁ die gleiche Drehposition in Achsrichtung A auf.

Die erste frustokonische Zentrierfläche 12 des Gehäuses 10 und die zweite frustokonische Zentrierfläche 32 des Gegenelements 30 liegen aneinander an und zwischen der erste frustokonische Zentrierfläche 12 des Gehäuses 10 und der zweiten frustokonischen Zentrierfläche 32 des Gegenelements 30 herrscht ein kraftinduzierter Formschlusses in der verriegelten Position P₁.

In der verriegelten Position P₁ ist durch das drehbar gelagerte Verschlusselement 20 eine Vorspannkraft auf die erste frustokonische Zentrierfläche 12 und die zweite frustokonische Zentrierfläche 32 zur Erzeugung des kraftinduzierten Formschlusses aufgebracht.

Wie bereits vorstehend beschrieben, weist der Kompressionsverschluss 1 zumindest ein Vorspannelement 40 auf. Dieses erzeugt in der verriegelten Position P₁ eine Vorspannkraft. Dabei ist das Verschlusselement 20 in Axialrichtung A gegenüber dem zumindest einen Vorspannelement und dem Gehäuse 10 ausgelenkt, sodass die Vorspannelement 40 das Verschlusselements 20 in Achsrichtung A vorspannt und die Vorspannkraft in Achsrichtung auf das Verschlusselement wirkt. Ebenso wirkt die Vorspannkraft auf das Verriegelungselement 22, das als Achse ausgebildet ist, auf welcher zumindest eine Rolle 24 drehbar gelagert ist, wobei die Rolle 24 dazu dient die Vorspannkraft auf das Gegenelement 30 aufzubringen. Auf diesem Weg wird die Vorspannkraft auf die erste frustokonische Zentrierfläche 12 und die zweite frustokonische Zentrierfläche 32 zur Erzeugung des kraftinduzierten Formschlusses aufgebracht.

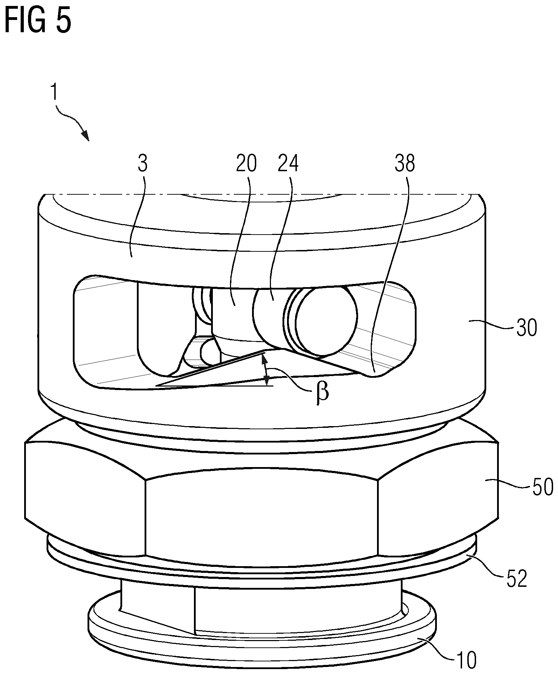

Fig. 5 zeigt in einer schematischen perspektivischen Darstellung den erfindungsgemäßen Kompressionsverschluss 1 gemäß Fig. 1 bis 4 in der verriegelten Position P2.

Wie aus Fig. 5 erkennbar weist das Gegenelement 30 die Ausnehmung 34 auf und zumindest eine Rollfläche 36 auf. Die Rollfläche 36 ist dabei innerhalb des Gegenelements im Bereich der Ausnehmung 34 angeordnet und stellt eine die Ausnehmung begrenzende Fläche dar.

Auf der Rollfläche 36 rollt die zumindest eine Rolle 24 beim Verdrehen des Verschlusselements 20 zwischen der geöffneten Position P₂ und der verriegelten Position P₁ ab.

Die Rollfläche 36 weist zumindest abschnittsweise eine Steigung β auf, die derart ausgebildet ist, dass beim Verdrehen des Verschlusselements 20 von der geöffneten Position P2 in die verriegelte Position P1 das Verschlusselement 20 gegenüber dem Gegenelement 30 in Achsrichtung A ausgelenkbar ist. Weiterhin weist die zumindest eine Rollfläche 36 eine Vertiefung 38 auf, die derart angeordnet ist, dass in der verriegelten Position P₂ des Verschlusselements 20 die zumindest eine Rolle 24 in der Vertiefung 38 eingerastet ist.

## Patentansprüche

1. Kompressionsverschluss (1), insbesondere zur Befestigung eines Verkleidungselements (2) an einer Halterung (3), umfassend
ein Gehäuse (10),
ein innerhalb des Gehäuses (10) drehbar gelagertes Verschlusselement (20) und ein Gegenelement (30), das mit dem Verschlusselement (20) in Eingriff bringbar ist,
**dadurch gekennzeichnet, dass**
das Gehäuse (10) eine erste frustokonische Zentrierfläche (12) und das Gegenelement (30) eine zweite frustokonische Zentrierfläche (32) zur Aufbringung eines kraftinduzierten Formschlusses aufweist.

2. Kompressionsverschluss (1) nach Anspruch 1,
**dadurch gekennzeichnet, dass**
durch das drehbar gelagerte Verschlusselement (20) eine Vorspannkraft auf die erste frustokonische Zentrierfläche (12) und die zweite frustokonische Zentrierfläche (32) zur Erzeugung des kraftinduzierten Formschlusses aufbringbar ist.

3. Kompressionsverschluss (1) nach Anspruch 1 oder 2,
**dadurch gekennzeichnet, dass**
das Verschlusselement (20) drehbar um eine Längsachse (A) zwischen einer verriegelten Position (P₁) und einer geöffneten Position (P2) ausgebildet ist, wobei der Drehwinkel zwischen der verriegelten Position (P₁) und der geöffneten Position (P₁) vorzugsweise 90° beträgt.

4. Kompressionsverschluss (1) nach einem der Ansprüche 1 bis 3, **dadurch gekennzeichnet, dass**
das Verschlusselement (20) ein Verriegelungselement (22) aufweist.

5. Kompressionsverschluss (1) nach Anspruch 4,
**dadurch gekennzeichnet, dass**
das Gegenelement (30) zumindest eine Ausnehmung (34) zur Führung des Verriegelungselements (22) aufweist.

6. Kompressionsverschluss (1) nach einem der Ansprüche 4 oder 5,
**dadurch gekennzeichnet, dass**
das Verriegelungselement (22) eine Achse ist, auf welcher zumindest eine Rolle (24) drehbar gelagert ist, wobei die Rolle (24) dazu dient, die Vorspannkraft auf das Gegenelement (30) aufzubringen.

7. Kompressionsverschluss (1) nach einem der Ansprüche 1 bis 6,
**dadurch gekennzeichnet, dass**
das Gegenelement (30) zumindest eine Rollfläche (36) aufweist, auf der die zumindest eine Rolle (24) beim Verdrehen des Verschlusselements (20) zwischen der geöffneten Position (P₂) und der verriegelten Position (P₁) abrollt, wobei die Rollfläche (36) zumindest abschnittsweise eine Steigung (β) aufweist, die derart ausgebildet ist, dass beim Verdrehen des Verschlusselements (20) von der geöffneten Position (P₂) in die verriegelte Position (P₁) das Verschlusselement (20) gegenüber dem Gegenelement (30) in Achsrichtung (A) ausgelenkbar ist.

8. Kompressionsverschluss (1) nach Anspruch 7,
**dadurch gekennzeichnet, dass**
die zumindest eine Rollfläche (36) eine Vertiefung (38) aufweist, die derart angeordnet ist, dass in der verriegelten Position (P₂) des Verschlusselements (20) die zumindest eine Rolle (24) in der Vertiefung (38) eingerastet ist.

9. Kompressionsverschluss (1) nach einem der Ansprüche 1 bis 8,
**dadurch gekennzeichnet, dass**
der Kompressionsverschluss (1) zumindest ein Vorspannelement (40) aufweist, dass zwischen dem Verschlusselement (20) und dem Gehäuse (10) angeordnet ist und bei axialer Auslenkung des Verschlusselements (20) in Achsrichtung (A) die Vorspannkraft erzeugt.

10. Kompressionsverschluss (1) nach einem der Ansprüche 1 bis 9,
**dadurch gekennzeichnet, dass**
die erste frustokonische Zentrierfläche (12) zweistufig ausgebildet ist und die zweite frustokonische Zentrierfläche (32) zweistufig ausgebildet ist.

11. Kompressionsverschluss (1) nach Anspruch 10,
**dadurch gekennzeichnet, dass**
ein erster Bereich (12.1) der ersten frustokonischen Zentrierfläche (12) einen kleineren Kegelwinkel (α₁) aufweist als ein Kegelwinkel (α₂) des zweiten Bereichs (12.2) der ersten frustokonischen Zentrierfläche (12) und/oder ein erster Bereich (32.1) der zweiten frustokonischen Zentrierfläche (32) einen kleineren Kegelwinkel (α₃) aufweist als ein Kegelwinkel (α₄) des zweite Bereich (32.2) der zweiten frustokonischen Zentrierfläche (32).

12. Kompressionsverschluss (1) nach einem der Ansprüche 1 bis 11,
**dadurch gekennzeichnet, dass**
dem Gehäuse (10) eine Gehäusemutter (50) zugeordnet ist, mit welcher das Gehäuse (10) an einem Verkleidungselement (3) befestigbar ist.

13. Kompressionsverschluss (1) nach einem der Ansprüche 1 bis 12,
**dadurch gekennzeichnet, dass**
dem Gegenelement (30) eine Sicherungsmutter (60) zugeordnet ist, mit welcher das Gegenelement (30) an der Halterung (3) befestigbar ist.

14. System (100) umfassend einen Kompressionsverschluss (1) nach einem der Ansprüche 1 bis 13 und ein Verkleidungselement (2) und eine Halterung (3),
wobei das Verkleidungsteil (2) durch den Kompressionsverschluss (1) an der Halterung (3) befestigt ist.
